# EUROPEAN PATENT SPECIFICATION

(11) **EP 1 309 389 B1**
(45) Date of publication and mention of the grant of the patent: **02.06.2004**
(21) Application number: 01949700.7
(22) Date of filing: 13.07.2001
(51) Int. Cl.: B01D 53/32, B01D 53/92, F01N 3/08, B01J 19/08

(54) **PLASMA ASSISTED GAS REACTORS**
GASREAKTOREN MIT PLASMAUNTERSTÜTZUNG
REACTEUR A GAZ A ASSISTANCE PLASMATIQUE

(30) Priority: 18.08.2000 GB 0020430
(43) Date of publication of application: 14.05.2003
(73) Proprietor: Accentus plc, Didcot, Oxfordshire OX11 0QJ (GB)
(72) Inventor: Bond, Robert Alexander, Witney, Oxfordshire OX8 6PP (GB); Hall, Stephen Ivor, Oxford, Oxfordshire OX8 8AW (GB); Inman, Michael, Abingdon, Oxfordshire OX14 5NU (GB)
(74) Representative: Talbot-Ponsonby, Clare Josephine
(86) International application number: PCT/GB2001/003164
(87) International publication number: WO 2002/016011

(56) References cited:
- EP-A- 0 646 996
- WO-A-00/51714
- WO-A-00/71866
- WO-A-99/13973
- US-A- 5 866 081

## Description

The present invention relates to reactors for the plasma assisted processing of gaseous media, and, more specifically, to such reactors for the treatment of the emissions of one or more of nitrogenous oxides, particulate including carbonaceous particulate, hydrocarbons including polyaromatic hydrocarbons, carbon monoxide and other regulated or unregulated combustion products from the exhausts of internal engines.

One of the major problems associated with the development and use of internal combustion engines is the noxious exhaust emissions from such engines. Two of the most deleterious materials, particularly in the case of diesel engines, are particulate matter (primarily carbon) and oxides of nitrogen such as nitric oxide and nitrogen dioxide, often referred to as NOₓ. Excessive levels of NOₓ are also produced by spark-ignition engines operating in what is known as 'lean burn' mode in which the air:fuel ratio is higher than that required for stoichiometric combustion. It is also appreciated that alternative fuels and hybrid type combustion engines, as an example which may burn diesel fuel and/or natural gas, may also pose a similar problem. Increasingly severe emissions control regulations are forcing internal combustion engine and vehicle manufacturers to find more efficient ways of removing these materials in particular from internal combustion engine exhaust emissions.

One of the ways in which emissions are being reduced is by modifying the combustion process in the engine. Modifications include altering injection timing, engine design, common rail systems and exhaust gas recirculation (EGR) but all have certain limitations for practical engine operation. However, in practice, it is found that combustion techniques which improve the situation in relation to one of the above components of internal combustion engine exhaust emissions tend to worsen the situation in relation to the other.

There are however numerous aftertreatment techniques being developed to remove NO, emissions from exhaust gases from internal combustion engine exhaust as well as other waste gas sources. One such aftertreatment technique involves non-thermal plasmas, often combined with catalysts. One form of reactor for the plasma assisted processing of gaseous media includes a reactor bed of gas permeable dielectric material through which the gaseous medium is constrained to pass. The reactor bed is contained between two electrodes by means of which there can be applied across the reactor bed a potential sufficient to excite a plasma in the gaseous medium in the interstices within the reactor bed material. Such reactors are described in our earlier patents GB 2,274,412, EP 1 017 477 B and US patents 3,983,021, 4 954,320 and 5,609,736. The reactor bed material, when this comprises a ferroelectric material such as barium titanate can be prepared by the methods described in WO 00/78691. Another type of reactor for the plasma assisted processing of gaseous media is the dielectric barrier or silent discharge reactor in which the electrodes are separated by at least one layer of dielectric material and in which the space between the electrodes can be filled with a bed of dielectric gas permeable material. The electrodes in a dielectric barrier reactor can be planar, spherical or in the form of concentric cylinders. Examples of dielectric barrier reactors are described in WO 00/71866 and WO 00/51744.

In general, for any given type of reactor bed and/or gaseous medium to be processed there is an optimum value for the electric field within the reactor bed. However, when the electrodes have a cylindrical geometry, being co-axial and one within the other, the radial distribution of the electric field is non-uniform, varying inversely with the distance from the axis of the reactor so that some regions of the reactor bed will have electric fields below the optimum value while other regions will have electric fields above the optimum value. In practice, when non-uniformities in the gas flow pattern also are taken into account, the efficiency of a reactor can be reduced to less than a quarter of its maximum value.

It is an object of the present invention to provide an improved form of reactor having a cylindrical geometry for the plasma assisted processing of a gaseous medium.

According to the present invention there is provided a reactor for the plasma assisted processing of a gaseous medium, the reactor including a reactor bed made of a gas permeable dielectric material contained between two concentric cylindrical electrodes by means of which there can be applied across the reactor bed a potential sufficient to establish a plasma in the gaseous medium in the interstices within the reactor bed, wherein the material composition and its distribution within the bed are arranged so- that an increase in effective permittivity with a decrease in the radial location is provided for at least part of the bed, thereby to reduce radial variations in the electric field in the said part of the bed, and there is provided a plurality of radially extending projections made of a dielectric material the permittivity of which differs from that of the effective permittivity of the reactor bed, the configuration of the radially-extending protrusions being such as to reduce the radial variations in the electric field in the neighbourhood of the inner electrode.

By effective permittivity we mean the permittivity which results from the combination of the dielectric material in the bed and the associated interstices therein.

To achieve a precisely uniform electric field across the radial extent of the bed, the material composition and distribution would have to be such as to vary inversely in proportion to the radius.

In addition, the material of the reactor bed may be graded into a plurality of radial zones, each zone, apart from the innermost zone, having an effective permittivity lower than its adjacent zone of smaller radius and, apart from the outermost zone, higher than its adjacent zone of larger radius.

For a bed of given radial extent, the larger the number of zones, the more closely is it possible to approximate a uniform electric field across the radial extent of the bed.

The radial protrusions may be radially oriented longitudinal vanes or a series of regularly spaced disks. Preferably the thickness of the radial projections is inversely related to the radial distance from the outer surface of the inner electrode. Enhanced electrostatic trapping of particulate material such as carbonaceous particulate can occur due to the presence of the radial protrusions.

The bed of gas permeable dielectric material can have catalytic properties or develop catalytic properties in the plasma region for removal for example by oxidation, of carbonaceous particulates or reduction of nitrogeneous oxides for example by selective catalytic reduction.

Specific embodiments of the invention will now be described, by way of example, with reference to the accompanying drawings, in which:
Figure 1 shows a longitudinal section of a reactor for the plasma assisted processing of a gaseous medium;
Figure 2 shows how the radial electric field varies with radius for the plasma assisted gas reactor of Figure 1;
Figure 3 shows one form of field distribution device embodying the invention;
Figures 4 to 8 show electric field variation curves for various forms of the field-distributing device of Figure 3;
Figure 9 is a longitudinal section of part of a reactor for the plasma assisted processing of a gaseous medium, incorporating a second embodiment of the invention;
Figure 10 shows electric field variation curves for two forms of the second field-distributing device;
Figure 11 is a diagrammatic representation of a reactor bed divided into five separate zones, and
Figure 12 is a graphical representation of the radial variation of the electric field for the reactor bed shown in Figure 11 compared with the radial variation of electric field in a reactor bed having uniform permittivity.

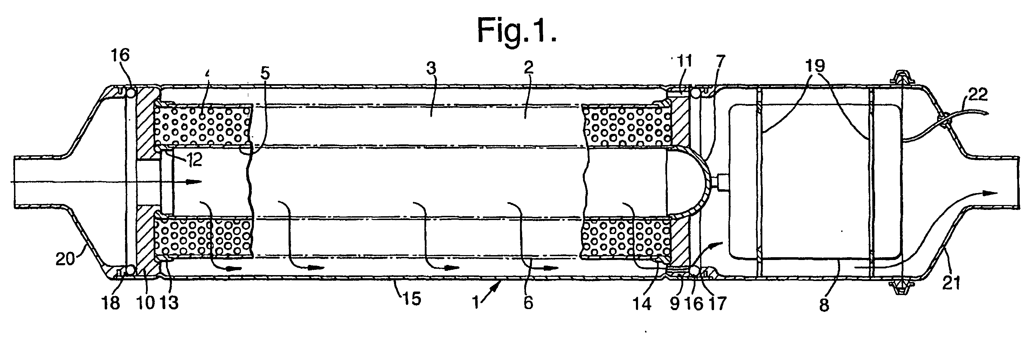

Referring to Figure 1 of the drawings, a reactor assembly 1 for treating the exhaust gases from internal combustion engines comprises a reactor bed 2 which consists of a bed 3 of pellets 4 of a ceramic dielectric material, such as described in our earlier patent GB 2 274 412 or EP 1 017 477 B, which is contained between inner and outer perforated stainless steel electrodes 5 and 6 respectively. The shape of the dielectric material is not restricted to pellets and can also be in the form of spheres, extrudates, fibres, sheets, wafers, frits, meshes, coils, foams, membranes, ceramic honeycomb monolith or granules or as a coating on or contained within a material as described in PCT/GB01/00442, filed 2 February 2001, UK priority 30 June 2000. The inner electrode 5 is closed by a stainless steel thimble 7 which is connected directly to a high voltage supply 8. A convenient potential for the excitation of the plasma is of the order of kilovolts to tens of kilovolts and repetition frequencies in the range 50 to 5000 Hz, although higher frequencies of the order of tens of kilohertz can be used. Pulsed direct current is convenient for automotive use, but alternating potentials for example triangular or sine waves of the same or similar characteristics can be used. The ends of the reactor bed 2 are closed by two ceramic end plates 9 and 10 respectively which also act as support plates. The end-plate 9, which is at the same end of the reactor bed 2 as the thimble 7 has a series of axial holes 11 around its periphery. Also at the ends of the electrodes 5 and 6 are stainless steel rings 12, 13 and 14 which are so shaped as to reduce as far as is practicable arcing between the ends of the electrodes 5 and 6 and their respective end plates 9 and 10. The whole assembly is encased in a gas tight stainless steel chamber 15. Thermal expansion of the reactor bed 2 is accommodated by expansion rings 16 positioned between the supports 9 and 10 and respective abutments 17 and 18, which form part of the chamber 15. The power supply 8 is positioned within the chamber 15 by perforated plates or spiders 19, and is protected with a thermal barrier surface coating. The chamber 15 has inlet and outlet nozzles 20 and 21, respectively, by means of which it can be attached to the remainder of an internal combustion engine exhaust system, which is not shown in the drawing.

The power supply 8, which is positioned at the cooler end of the reactor assembly 1, includes an inverter for converting a dc input 22 from a vehicle's power supply to a pulsed, or alternating form and transforming it to the inner electrode 5 of the reactor bed 2. The power supply, in this example, is adjacent to the reactor as described in WO99/05400.

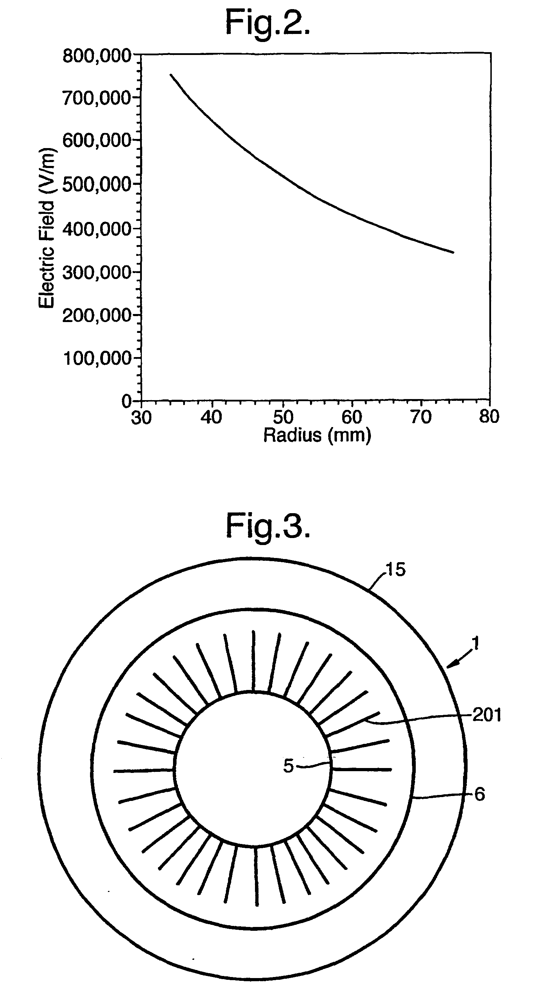

Figure 2 shows how the radial component of the electric field in the reactor bed 2 varies. The nonlinear nature of the inverse relationship between the electric field and the distance from the axis of the reactor chamber 1 readily is apparent. As explained in the introduction to this specification, this variation in the radial electric field can have considerable repercussions on the effectiveness of the reactor. If, for example, the reaction to be carried out on the gaseous medium requires the presence in the reactor bed 2 of an electric field greater than about 0.5 MV m⁻¹, then it can be seen from Figure 2 that more than 60% of the volume of the reactor bed 2 will experience an electric field less than this value. As a consequence of this less than 40% of the volume of the reactor bed 2 will take part in the processing of the gaseous medium. Furthermore, the effectiveness of the processing of the gaseous medium will be a function of the transit time of the gaseous medium through the reactor 1. As the total mass flow rate is constant in the reactor shown in Figure 1, the velocity also will vary inversely with the distance from the axis of the reactor. (In fact it will be nearly twice as fast at the inner electrode 5 as at the outer electrode 6). As a result, the effectiveness of the processing of the gaseous medium could fall by another 40% approximately. The result is that, overall, the effectiveness of the reactor could be reduced to less than 20% of the nominal value.

Clearly, increasing the electric field strength in the outer regions of the reactor bed 2 would have a highly beneficial effect.

Figure 3 is a diagrammatic cross-section of a reactor similar to that of Figure 1, but including an electric field distributing device according to the invention. Referring to Figure 2, those components which are similar to corresponding components of the reactor of Figure 1 have the same reference numerals. The pellets 4 of dielectric material, however, have been omitted. Mounted on the inner electrode 5 are sixteen regularly spaced and radially oriented vanes 201. The vanes 201, which extend along the length of the reactor bed 2, are made of a material which has a higher permittivity than the effective permittivity of the reactor bed 2 (i.e. the permittivity which results from the combination of dielectric pellets 4 and the interstices therebetween).

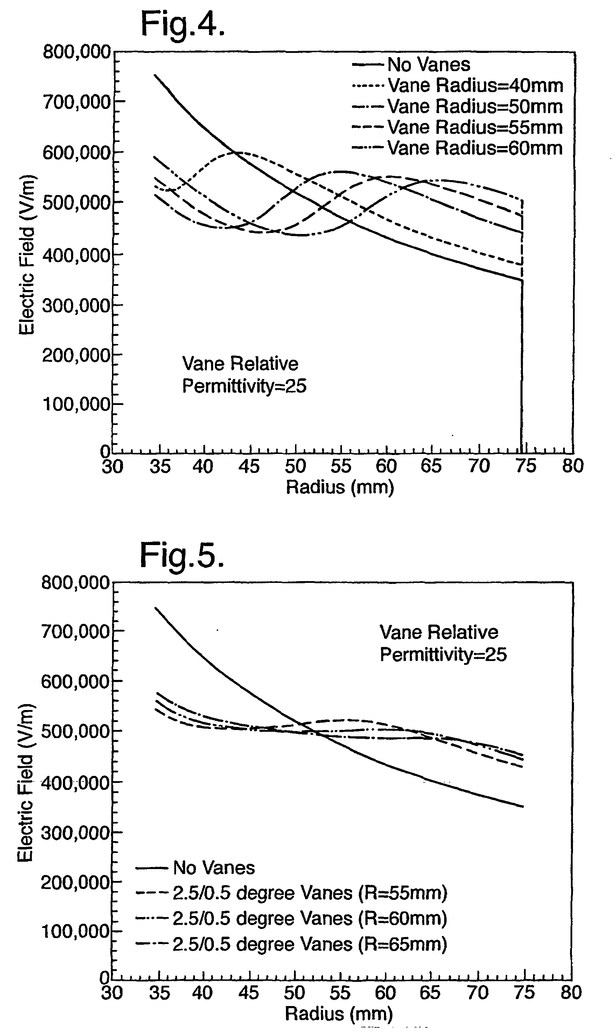

Figure 4 shows the radial variations in the electric field in the middle of the region between any pair of vanes 201 for differing radii of the vanes 201 relative to the axis of the reactor 1. In all cases the ratio between the effective permittivity of the reactor bed 3 and the permittivity of the vanes 201 is 5 and the vanes 201 have a constant azimuthal angular width. (In practice, this means that the actual width of the vanes 201 increases from their roots to their tips).

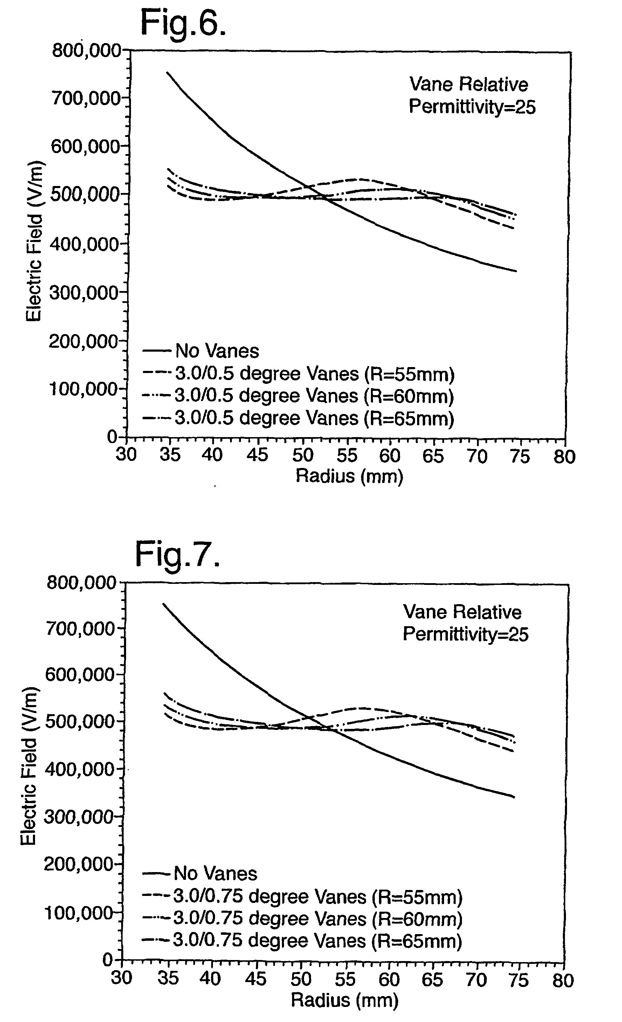

It can be seen that the electric field in the region between any two vanes 201 is reduced and that in the outer region of the reactor bed 2 is increased. However, considerable variations in the electric field still. occur, particularly at the tips of the vanes 201. This effect can be reduced by tapering the vanes 201 and Figures 5, 6 and 7 show the radial variation of the electric field for vanes 201 of differing radii and tapers, expressed in azimuthal angle terms. In physical terms, for a reactor bed 2 which has an internal radius of 35 mm and an external radius of 75 mm, the optimum dimensions for the vanes 201 are: length 25.5 mm, tip width 1.6 mm and root width 3.6 mm.

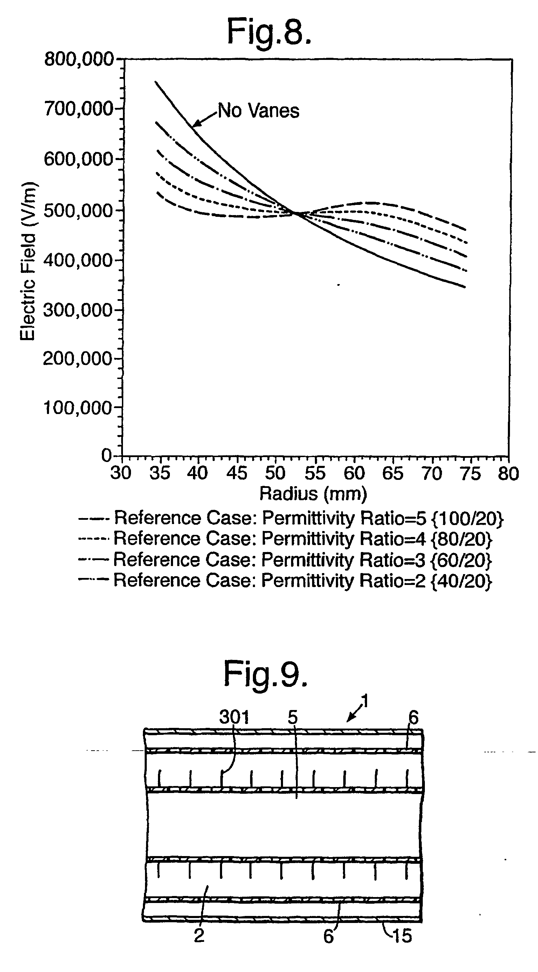

The ratio between the effective permittivity of the reactor bed 2 and the permittivity of the vanes 201 also affects the form of the radial electric field distribution and Figure 8 shows the radial electric field variations for a series of vanes 201 having the same cross-sections but different permittivity ratios. It can be seen that for this particular geometry the electric field becomes progressively more uniform as the ratio approaches 5. For a different geometry a different optimum ratio would be obtained.

Figure 9 shows a cross-section of a portion of a reactor for the plasma assisted processing of a gaseous medium, incorporating a second embodiment of the invention. Again the pellets 4 forming the reactor bed 2 are not shown. In this case, the inner electrode 5 has a series of regularly spaced disks 301 mounted upon it to form the radial projections.

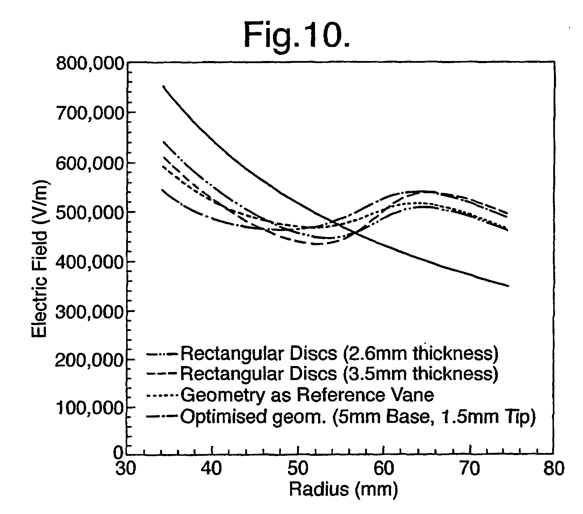

Figure 10 shows the variations in the radial electric field for disks 301 of two differing thicknesses and radii and, also, for two different types of tapering disks 301. It can be seen that the effect of the disks 301 is similar to that of the vanes 201. Although no curves are shown, the ratio of the effective permittivity of the bed to permittivity of the vanes has a similar effect.

In general, the present invention requires that the ratio of the permittivity of the vane/disk to the effective permittivity of the reactor bed should be greater than 4.

The radial projections on the inner electrode 5 may have other forms. For example, they may be regularly spaced helical vanes.

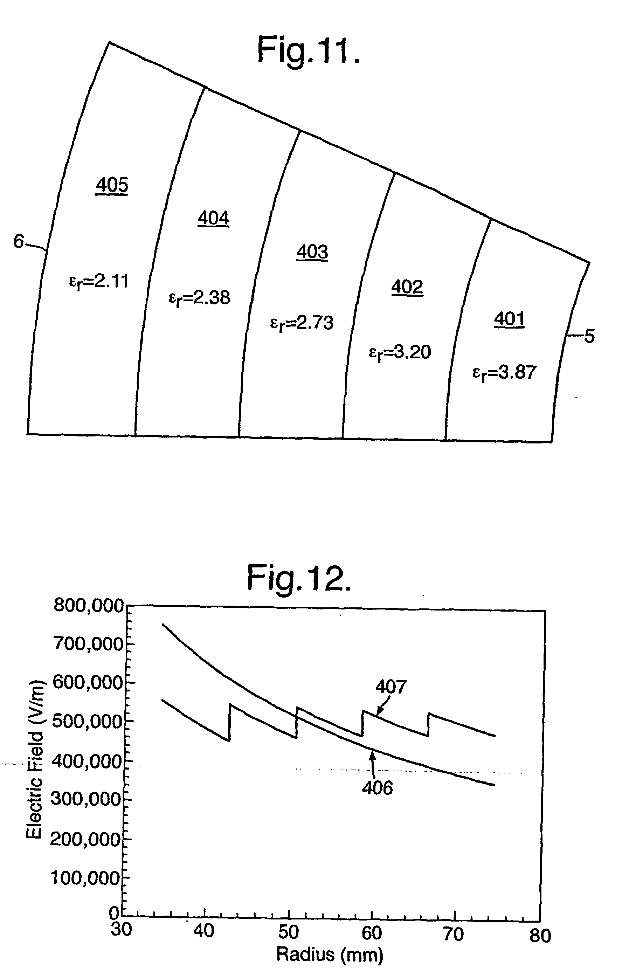

Figure 11 shows in diagrammatic cross-section a segment of a reactor bed divided into five separate zones 401 to 405 between inner electrode 5 and outer electrode 6. The effective permittivity in each zone is graded, for example by modifying the composition of the pellets, or some of the pellets and/or their size. In this example, the effective permittivity for each zone is:
3.87 in 401
3.20 in 402
2.73 in 403
2.38 in 404
2.11 in 405

The effect upon radial variation of electric field is shown in Figure 12, in which line 406 shows the electric field variation with radius for a bed of uniform permittivity and line 407 shows the electric field variation with radius for the bed having graded permittivity in zones as shown in Figure 11.

It will be appreciated that the more zones used, the better the electric field uniformity, being perfectly uniform in the limit of an infinite number of zones and hence a continuous radial variation in permittivity.

Radially extending projections can also be used in dielectric barrier or silent discharge reactors in which the electrodes have cylindrical or spherical geometry. The embodiments of reactor described in these examples may include catalytic components which may require the addition of additives such as oxidant or reductant additives or be installed as part of an emissions control system employing catalysts or other emission control devices for the plasma assisted treatment of the exhaust gases from, but not restricted to,.internal combustion engines for example for stationary turbines. Examples of catalytic materials for the treatment of carbonaceous materials and nitrogen oxides are described in WO 00/71866, WO 00/43102, described in PCT/GB01/00442, filed 2 February 2001, UK priority 30 June 2000, PCT/GB01/01571, filed 11 April 2001, UK priority 11 April and 18 August 2000, GB 00 20287.9, UK filed 17 August 2000 and EP 1 017 477B. Dielectric bed material may also act to selectively trap or adsorb a predetermined chemical species as described in WO 01/30485 while the reactor embodiments can be combined with a vehicle power supply system described in WO 00/50746. Other emission control devices may comprise but are not restricted to exhaust gas recirculation (EGR), variations in ignition timing, fuel injection timing and fuel injection pulse rate shaping. The reactor of these examples can be used in conjunction with a power supply and engine management system as described in the specification of application WO 00/50746. An article 'Stop'go systems get the green light' in European Automotive Design, April 1998, pages 24-26 describes an example of an integrated starter alternator damper system (ISAD). Such an ISAD can be used as part of a power supply system to power a plasma assisted emissions control system of which a reactor as described herein is part. In addition, other power sources such as but not limited to single/multiple output 12/14V alternator technologies e.g. 14V/42V, fuel cells, gas turbines, solar cells and heat exchangers can be the primary or part-provider of the electrical-generating power source that can also be used to power the power supply system for the reactor.

## Claims

1. A reactor for the plasma assisted processing of a gaseous medium, the reactor including a reactor bed made of a gas permeable dielectric material contained between two concentric cylindrical electrodes by means of which there can be applied across the reactor bed a potential sufficient to establish a plasma in the gaseous medium in the interstices within the reactor bed, wherein the material composition and its distribution within the bed are arranged so that an increase in effective permittivity with a decrease in the radial location is provided for at least part of the bed, thereby to reduce radial variations in the electric field in the said part of the bed, and there is provided a plurality of radially extending projections, made of a dielectric material the permittivity of which differs from that of the effective permittivity of the reactor bed, the configuration of the radially-extending protrusions being such as to reduce the radial variations in the electric field in the neighbourhood of the inner electrode.

2. A reactor according to claim 1, wherein the material of the reactor bed is arranged to provide levels of effective permittivity graded in a plurality of radial zones, so that each zone, apart from the innermost zone, has an effective permittivity lower than its adjacent zone of smaller radius and, apart from the outermost zone, higher than its adjacent zone of larger radius.

3. A reactor according to claim 1 or 2, wherein the ratio between the permittivity of the material from which the radial projections are made and the effective permittivity of'the reactor bed is at least 4.

4. A reactor according to any of claims 1 to 3, wherein the thickness of the radial protrusions varies inversely with distance from the longitudinal axis of the reactor.

5. A reactor according to claim 4, wherein the radial projections taper at an included half angle of two degrees, fifteen minutes.

6. A reactor according to any of claims 1 to 5, wherein the radial projections extend approximately half the radial width of the reactor bed.

7. A reactor according to any of claims 1 to 6, wherein the radial projections comprise a plurality of regularly spaced radially oriented longitudinal vanes.

8. A reactor according to any of claims 1 to 6, wherein the radial projections comprise a series of transverse disks regularly spaced along the length of the reactor bed.

9. A reactor according to any preceding claim adapted to form part of the exhaust system of an internal combustion engine.

## Patentansprüche

1. Reaktor für die plasmagestützte Verarbeitung eines gasförmigen Mediums, wobei der Reaktor ein Reaktorbett aus einem gaspermeablen dielektrischen Material umfasst, das zwischen zwei konzentrischen zylindrischen Elektroden enthalten ist, durch die man ein Potential über das Reaktorbett anlegen kann, das ausreicht, ein Plasma im gasförmigen Medium in den Zwischenräumen innerhalb des Reaktorbettes zu erzeugen, wobei die Zusammensetzung des Materials und seine Verteilung innerhalb des Bettes so angeordnet ist, dass bei einer Abnahme der radialen Positionierung eine Zunahme der effektiven Dielektrizitätskonstante zumindest für einen Teil des Bettes zur Verfügung gestellt wird, um dadurch radiale Schwankungen im elektrischen Feld in diesem Teil des Bettes zu verringern; außerdem wird eine Vielzahl sich radial erstreckender Vorsprünge zur Verfügung gestellt, hergestellt aus einem dielektrischen Material, dessen Dielektrizitätskonstante sich von der effektiven Dielektrizitätskonstante des Reaktorbettes unterscheidet, wobei die Konfiguration der sich radial erstreckenden Vorsprünge so ist, dass die radialen Schwankungen im elektrischen Feld in der Nähe der inneren Elektrode verringert werden.

2. Reaktor nach Anspruch 1, bei dem das Material des Reaktorbettes so angeordnet ist, das Stärken der effektiven Dielektrizitätskonstante zur Verfügung gestellt werden, die in einer Vielzahl radialer Zonen abgestuft sind, so dass jede Zone bis auf die innerste eine effektive Dielektrizitätskonstante hat, die niedriger ist als die der benachbarten Zone mit kleinerem Radius, und bis auf die äußerste Zone höher ist als die der benachbarten Zone mit größerem Radius.

3. Reaktor nach Anspruch 1 oder 2, bei dem das Verhältnis zwischen der Dielektrizitätskonstante des Materials, aus dem die radialen Vorsprünge bestehen, und der effektiven Dielektrizitätskonstante des Reaktorbettes mindestens 4 beträgt.

4. Reaktor nach einem der Ansprüche 1 bis 3, bei dem die Dicke der radialen Vorsprünge umgekehrt zum Abstand von der Längsachse des Reaktors schwankt.

5. Reaktor nach Anspruch 4, bei dem die radialen Vorsprünge sich bei einem eingeschlossenen Halbwinkel von 2° 15' verjüngen.

6. Reaktor nach einem der Ansprüche 1 bis 6, bei dem sich die radialen Vorsprünge etwa über die Hälfte der radialen Breite des Reaktorbettes erstrecken.

7. Reaktor nach einem der Ansprüche 1 bis 5, bei dem die radialen Vorsprünge eine Vielzahl von gleichmäßig beabstandeten, radial orientierten Längsflügeln umfassen.

8. Reaktor nach einem der Ansprüche 1 bis 6, bei dem die radialen Vorsprünge eine Reihe von transversalen Scheiben umfassen, die gleichmäßig entlang der Länge des Reaktorbettes beabstandet sind.

9. Reaktor nach einem der vorstehenden Ansprüche, der darauf ausgelegt ist, Teil des Auspuffsystems eines Verbrennungsmotors zu bilden.

## Revendications

1. Réacteur pour le traitement assisté par plasma d'un milieu gazeux, le réacteur comprenant un lit de réacteur fabriqué en un matériau diélectrique perméable au gaz contenu entre deux électrodes cylindriques concentriques à l'aide desquelles peut être appliqué au sein du lit de réacteur un potentiel suffisant pour établir un plasma dans le milieu gazeux dans les interstices au sein du lit de réacteur, dans lequel la composition du matériau et sa répartition dans le lit sont prévues de telle sorte qu'une augmentation de la permittivité efficace et une diminution de l'emplacement radial soient fournies pour au moins une partie du lit, afin de réduire les variations radiales du champ électrique dans ladite partie du lit, et dans lequel est prévue une pluralité de projections s'étendant radialement, fabriquées en un matériau diélectrique dont la permittivité diffère de celle de la permittivité efficace du lit de réacteur, la configuration des proéminences s'étendant radialement étant telle qu'elle réduit les variations radiales du champ électrique à proximité de l'électrode interne.

2. Réacteur selon la revendication 1, dans lequel le matériau du lit de réacteur est agencé pour fournir des niveaux de permittivité efficace classés en une pluralité de zones radiales, de telle sorte que chaque zone, à l'exclusion de la zone la plus centrale, possède une permittivité efficace inférieure à la zone adjacente de rayon plus petit et que chaque zone, à l'exception de la zone la plus extérieure, possède une permittivité efficace supérieure à la zone adjacente de rayon plus grand.

3. Réacteur selon la revendication 1 ou 2, dans lequel le rapport entre la permittivité du matériau avec lequel les projections radiales sont fabriquées et la permittivité efficace du lit de réacteur est d'au moins 4.

4. Réacteur selon l'une quelconque des revendications 1 à 3, dans lequel l'épaisseur des projections radiales varie à l'inverse avec la distance par rapport à l'axe longitudinal du réacteur.

5. Réacteur selon la revendication 4, dans lequel les projections radiales réduisent progressivement à un demi-angle inclus de deux degrés, quinze minutes.

6. Réacteur selon l'une quelconque des revendications 1 à 5, dans lequel les projections radiales s'étendent à peu près sur la moitié de la largeur radiale du lit de réacteur.

7. Réacteur selon l'une quelconque des revendications 1 à 6, dans lequel les projections radiales comprennent une pluralité d'ailettes longitudinales orientées de manière radiale et espacées de manière régulière.

8. Réacteur selon l'une quelconque des revendications 1 à 6, dans lequel les projections radiales comprennent une série de disques transversaux espacés de manière régulière le long du lit de réacteur.

9. Réacteur selon l'une quelconque des revendications précédentes adapté pour former une partie du système d'échappement d'un moteur à combustion interne.
